# EUROPEAN PATENT SPECIFICATION

(11) **EP 2 794 995 B1**
(45) Date of publication and mention of the grant of the patent: **13.01.2016**
(21) Application number: 11810827.3
(22) Date of filing: 20.12.2011
(51) Int. Cl.: E01C 19/20, A01C 15/02, B65D 83/06

(54) **DISPENSER APPARATUS**
SPENDERVORRICHTUNG
APPAREIL DISTRIBUTEUR

(43) Date of publication of application: 29.10.2014
(73) Proprietor: HUSQVARNA AB, 561 82 Huskvarna (SE)
(72) Inventor: MOCK, Axel, 89134 Blaustein (DE); SCHNEIDER, Regina, 89250 Senden-Aufheim (DE)
(74) Representative: Finkele, Rolf
(86) International application number: PCT/EP2011/073387
(87) International publication number: WO 2013/091680

(56) References cited:
- WO-A1-92/02447
- DE-A1-102010 002 665
- DE-U1- 8 136 271
- US-A1- 2006 201 974

## Description

### TECHNICAL FIELD

The present invention relates in general to a dispenser apparatus and in particular to a dispenser apparatus for dispensing particulate matter.

### BACKGROUND

The problems resulting from bad weather typical of winters such as snow falls, ice, hailstones, etc., result in unwanted accumulations. This has been a concern from the standpoint of view, effort and cost. This is particularly true for the sidewalks, driveways of small businesses and homes where it is difficult and cost prohibitive to use large snow removal equipments.

As a result, most of the homes and sidewalks remove the accumulated snow manually by shovelling or by using motor driven snow blowers. These methods merely redistribute the accumulated snow. There are known methods to melt the accumulated snow using salt. The salt may be spread over the accumulated snow that melts the snow. However, it is time consuming and a tedious task to first shovel the snow and then melt it using separate equipment. WO 92/02447 A discloses an apparatus for dispensing a particulate matter as salt.

In light of the foregoing, there is a need for an efficient way of removing and melting snow in homes, sidewalks, driveways for small businesses etc.

### SUMMARY

In view of the above, it is an objective of the present invention to solve or at least reduce the problems discussed above. In particular, the objective is to provide an improved apparatus for dispensing particulate matter.

The objective is at least partially achieved according to a novel apparatus, for dispensing particulate matter, described in claim 1. The apparatus includes a bucket and a cover. The bucket is configured to store the particulate matter and the cover is configured to be detachably connected to the bucket. The cover further comprises a selection plate, a shovel portion and a handle. The selection plate is configured to selectively dispense the particulate matter. The shovel portion facilitates dispensing of the particulate matter from the bucket and filling the particulate matter into the bucket. Further, the handle is configured to facilitate the handling of the apparatus.

According to claim 2, the shovel portion includes a scoop shape. The scoop shaped shovel portion facilitates easy shovelling of snow or other particulate matter with the selection plate closed in the apparatus. Additionally, the scoop shape of the cover facilitates the cover to be used separately for filling and refilling of the particulate matter into the bucket with the scoop of the cover. Further, according to claim 10, the shovel portion also includes a plurality of ribs configured to facilitate the flow of the particulate matter while dispensing.

Further, according to claim 3, the handle is configured to facilitate handling of the cover for shovelling. The cover may be used separately without the bucket, to shovel the external particulate matter such as snow and hailstones etc. According to the claim 4, the handle further includes a recessed portion configured to enable grip of the handle.

According to claim 5, the bucket includes a one or more recessed portions on the outer surface of the bucket. The recessed portions on the bucket are configured to enable strong grip of the bucket while filling and refilling the bucket with the particulate matter. Further according to claim 6, the bucket further includes a plurality of ribs to facilitate separation of solidified particulate matter due to vapor absorption. Due to environmental conditions, the particulate matter may get solidified, therefore, the ribs facilitate easy separation of the condensed particulate matter for dispensing.

According to claim 7, the selection plate includes a set of apertures configured to dispense the particulate matter. Further, the set of apertures may include a first set of apertures, a second set of apertures and a third aperture. These apertures are adjustable according to the required amount for dispensing the particulate matter.

Further according to claim 8, the selection plate includes a knob configured to select the at least one of first set of apertures, second set of apertures and third set of aperture. Furthermore, according to claim 9, the knob can be a rotatable or a slideable knob. The knob can be rotated or slided to select the desired set of aperture according to the required spread amount of the particulate matter.

According to claim 11, the cover is connected to the bucket by using either of a bayonet lock or a snap-fit lock.

According to claim 12, the handle is attached to the apparatus in a manner that during dispensing of the particulate matter, the handle is placed above the center of gravity of the apparatus. Since the handle is placed above the center of gravity of the apparatus, less force is required for dispensing the particulate matter, as the handle automatically tilts the apparatus along with the downward movement of the center of gravity of apparatus due to the weight of the particulate matter.

According to claim 13, the apparatus also incorporates a cutting member. This cutting member could preferably be attached on the cover at a location opposite the handle. This cutting member is intended to be used to open storage containers, in particular plastic bags, in which the particulate matter that ought to be dispensed using the apparatus is stored. By there is no need for the user to carry a knife or scissors in addition to the apparatus. The cutting member could be manufactured integrally with the cover, exhibiting sharp blade like edges to cut containers or plastic bags.

According to claim 14, the cutting member integrates at least one separately manufactured cutting blade. This could be a metal cutting blade integrated into a plastic body of the cutting member.

Further, according to claim 15, the apparatus is configured to dispense at least one of salt, fertilizers, sand, stones etc.

### BRIEF DESCRIPTION OF THE DRAWINGS

The invention will in the following be described in more detail with reference to the enclosed drawings, wherein:
FIG. **1** illustrates a perspective view of an apparatus for dispensing particulate matter, according to an embodiment of the present invention;
FIG. **2** illustrates a cross-sectional view of the apparatus during dispensing, according to the embodiment of FIG. **1**;
FIG. **3** illustrates a top view of the apparatus with a Selection Plate, according to the embodiment of FIG. **1**;
FIG. **4** illustrates a front view of the apparatus with a locked cover with the bucket, according to the embodiment of FIG. **1**;
FIG. **5** illustrates a top view of the apparatus during dispensing, according to the embodiment of FIG. **1**; and
FIG. **6** illustrates an apparatus for dispensing particulate matter, according to another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art as defined by the claims. For example, one or more aspects of the present invention can be utilized in other embodiments and even other types of devices. In the drawings, like numbers refer to like elements.

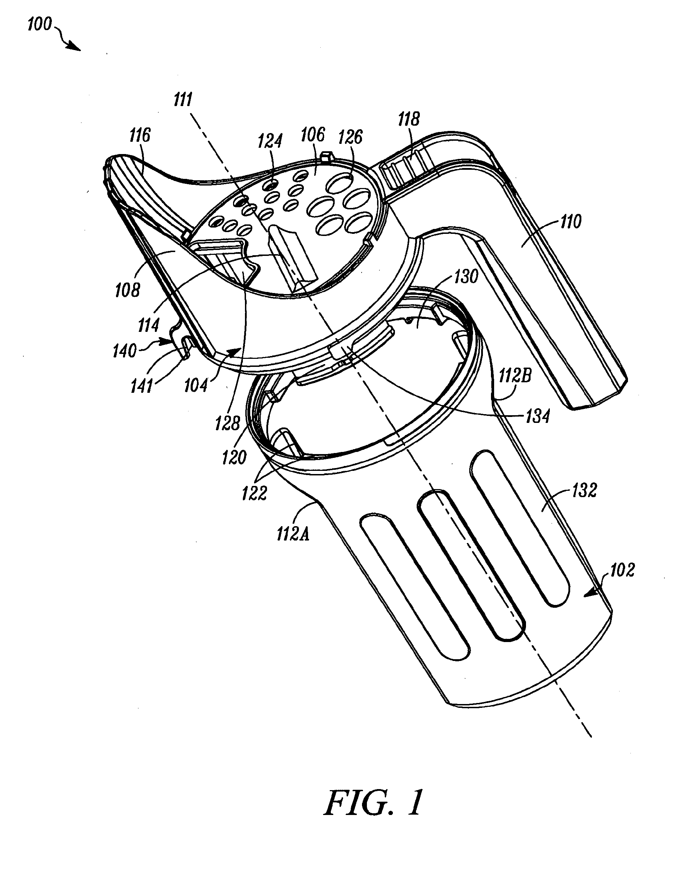

FIGS. **1- 5** illustrate various views of an apparatus **100** for dispensing particulate matter, according to the embodiments of the present invention. In one embodiment, the apparatus **100** is used for dispensing salt to melt snow in homes and sidewalks etc. In alternate embodiments, the apparatus **100** can be used to dispense other particulate matters such as small stones, seeds, sand, and fertilizers etc.

In accordance with an embodiment, the apparatus **100** includes a bucket **102** and a cover **104** detachably connected to the bucket **102**. The bucket **102** is configured to store the particulate matter. In one embodiment, the bucket **102** includes an inner surface **130** and an outer surface **132**. The inner surface **130** is in direct contact with the stored particulate matter. The outer surface **132** is the exterior portion of the bucket **102** that is exposed to the external environment. Further, the outer surface **132** may be used to print the details of the apparatus **100**, such as the name of the apparatus **100**, the capacity of the bucket **102** and the apparatus **100** etc., and the logo of the manufacturing company etc. As will be understood by a person skilled in the art, the printing techniques are the ones well known in the art and are beyond the scope of the invention.

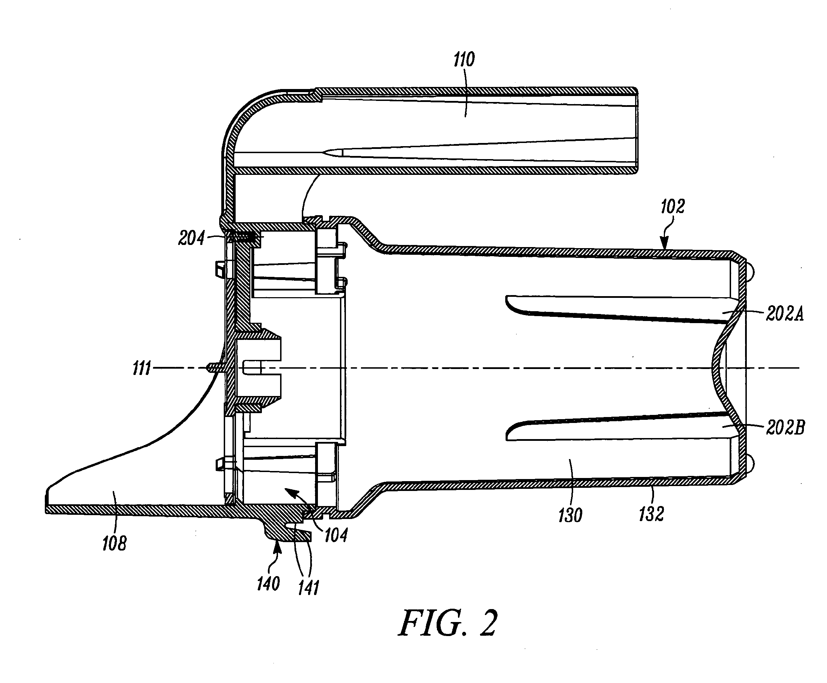

In a further embodiment the apparatus might incorporate a cutting member **140**. This cutting member is intended to be used to open in particular plastic bags or kind of storage containers in which the particulate matter that ought to be dispensed using the apparatus is stored. It is of advantage if the cutting member **140** is attached to the cover **104** as shown with exemplary embodiments of FIG. 1 and FIG. 2. Preferably the cutting member **104** is manufactured together with the cover **104** during the same manufacturing process, forming an integral part. To improve cutting performance the cutting member could exhibit sharpened blade-like edges **141**. Cutting performance can be further improved if the blade like edges **141** would be formed by special cutting blades manufactured for example from metal and which are incorporated into the body of the cutting member **140**. In a preferred embodiment the cutting member **140** is formed with a v-shaped opening, as shown with FIG. 1 and FIG. 2. It further improves ergonomics if the opening of the opening is oriented on the cover **140** facing in opposite direction than the shovel portion, thus allowing for a comfortable pulling action when cutting storage containers or bags.

Further, the bucket **102** includes a one or more recessed portions **112A** and **112B** (hereinafter collectively referred to as the recessed portions **112**) on the outer surface **132** of the bucket **102**. The recessed portions **112** facilitate easy and strong grip of the bucket **102** while filling or refilling the bucket **102** with the particulate matter. In one embodiment, the recessed portions **112** may be included on two sides of the outer surface **132**, substantially opposite to each other. However, in an alternate embodiment, the recessed portions **112** may be included on all the sides of the outer surface **132**. In further embodiment, the recessed portions **112** may be extended to the inner surface **130** of the bucket **102**. As will be appreciated by a person skilled in the art, the shape of the bucket **102** shown in the figures is exemplary, and may be varied to achieve similar results.

In a further embodiment, the bucket **102** includes a plurality of ribs **202A** and **202B** (hereinafter collectively referred to as the ribs **202**), as illustrated in FIG. 2, that illustrates a cross-sectional view of the apparatus **100**. The ribs **202** are configured to enable easy separation of the particulate matter when it solidifies during vapour absorption. For example, the salt stored in the bucket **102** may tend to solidify due to moisture and stick to the inner surface **130** of the bucket **102**, therefore the ribs **202** enable separation of the solidified salt for easy dispensing.

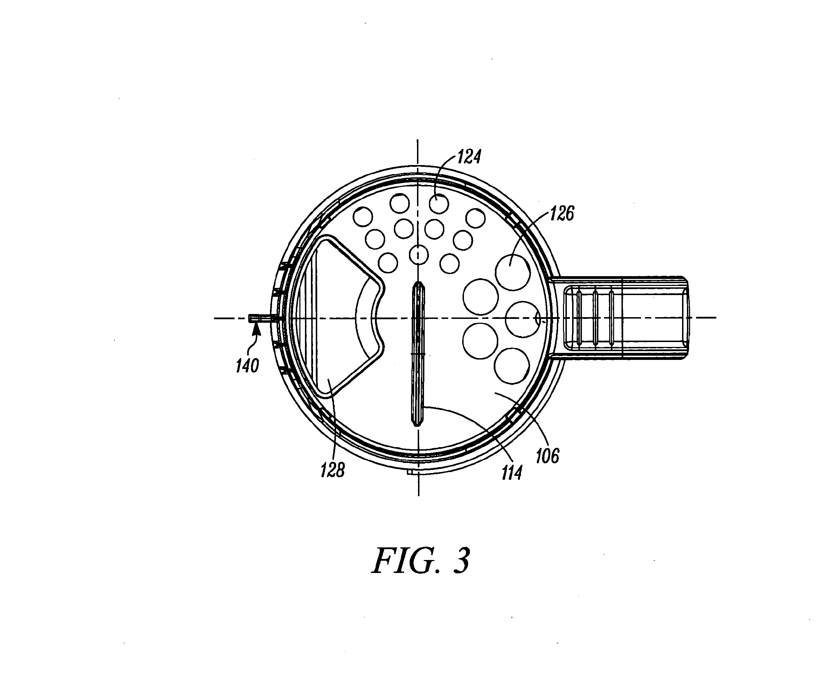

In a further embodiment, the cover **104** is configured to be detachably attached to the bucket **102** and allow selective dispensing of the particulate matter. As illustrated in FIG. 1, the cover **104** includes a selection plate **106**, a shovel portion **108**, and a handle **110**. The selection plate **106** enables selective dispensing of the particulate matter. In one embodiment, the selection plate **106** includes a plurality of apertures that can be adjusted according to the required amount for dispensing the particulate matter. For example, in a preferred embodiment the selection plate **106** may include a first set of apertures **124**, a second set of apertures **126** and a third aperture **128**, as illustrated more clearly in FIG. 3. In one embodiment, the first set of apertures **124** includes apertures that are relatively smaller than the second set of apertures **126** and the third aperture **128**. The second set of apertures **126** includes the apertures that are relatively larger than the first set of apertures **124** and relatively smaller than the third aperture **128**. Further, the third aperture **128** is a single aperture that is relatively larger than the first set **124** and the second set of apertures **126**. For example, if the required spread amount for dispensing the particulate matter is very less, such as sprinkling of the particulate matter, then the first set of apertures **124** may be selected. Similarly, when the required spread amount is large, then the second or third set of aperture **126**, **128** may be selected. In an alternative embodiment the selection plate **106** does exhibit an aperture that increases the opening towards the bucked when the selection plate **106** is turned, starting off from a closing position.

Preferably the selection plate **106** can be adjusted in a position where it fully closes off the bucket. As will be appreciated by a person skilled in the art, the set of apertures disclosed herein are merely illustrative and can be extended to any number and size of apertures.

In one embodiment, the selection plate **106** may also include a closure plate (not shown in the Figures) configured to close the cover **104** when the apparatus **100** is not in use. For example, the closure plate is configured to close the cover **104** in order to prevent unwanted external particles and moisture ingression into the bucket **102** resulting in destroying of the particulate matter.

In a further embodiment, the selection plate **106** includes a knob **114** configured to adjust or select the one or more set of apertures **124-128**. For example, the selection plate **106** is rotatable using the knob **114** in order to select the at least one set of apertures in the selection plate **106** or completely close the selection plate **106** by the closure plate. In one embodiment, the knob **114** is a rotatable knob placed at the top of the selection plate **106** as shown in the Figures. In an alternate embodiment, the knob **114** may be a slideable knob extending from the selection plate **106** to the side of the cover **104** that can be slided to adjust the set of apertures. For example, the knob **114** can be large arcuate knob for easy grip while using gloves, or a flat headed knob for simple rotation, or can be a small button below the selection plate **106** that can be slided.

In one embodiment, the selection plate **106** is connected to the handle **110** of the cover **104**, with a spring loaded ball **204**, as illustrated in FIG. 2, configured to hold the selection plate **106** in a correct position. For example, the selection plate **106** when correctly fitted to the cover **104** makes a 'click' sound that indicates that the selection plate **106** is placed in the correct position. In one embodiment, the 'click' sound indication prevents an unwanted extra turning of the selection plate **106** which may destroy the selection plate **106**. Also, the placement of the selection plate **106** at the correct position is of advantage so as to operate the selection plate **106** as desired for dispensing the particulate matter. However, if the selection plate **106** is not placed correctly, then it may slip or move while adjusting the apertures and thus reducing the operability of the apparatus **100**.

In one embodiment, the shovel portion **108** is configured to facilitate dispensing of the particulate matter from the apparatus **100** by adjusting the selection plate **106**. In another embodiment, the shovel portion **108** may be used for easy shovelling of external particulate matter such as snow that is slightly melted, while the selection plate **106** is completely closed in the apparatus **100**. In a yet another embodiment, the cover **104** may be used separately, wherein the shovel portion **108** may be used to simply shovel the external particulate matter. In one embodiment, the shovel portion **108** is a scoop shaped portion, to facilitate easy shovelling of the external matter. Additionally, the scoop shape of the shovel portion **108** enables the cover **104** to be used separately for filling and refilling of the particulate matter into the bucket **102**. As will be understood by a person skilled in the art, the scoop shape of the shovel portion **108** is merely illustrative and can be varied to achieve similar results.

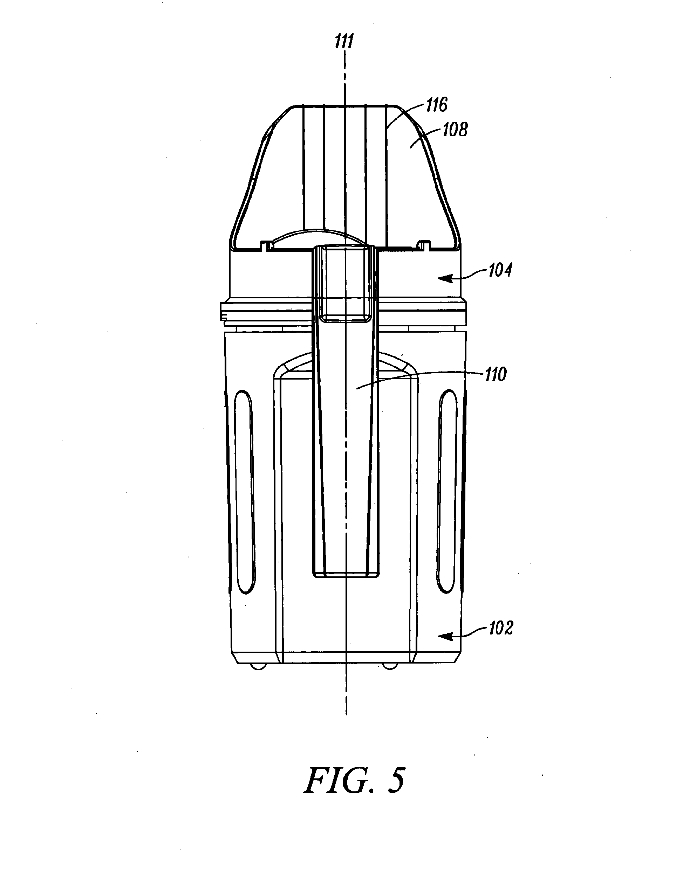

According to the embodiments presented herein, the shovel portion **108** includes a plurality of ribs **116,** as illustrated more clearly in FIG. 5, configured to facilitate the flow of the particulate matter while dispensing from the apparatus **100.** For example, the ribs **116** may restrict the flow of the particulate matter such that the particulate matter is not spread in the unwanted areas. However, in an alternate embodiment, the shovel portion **108** may not include the ribs **116** so as to allow the flow of the particulate matter to wide areas from the apparatus **100**.

In a further embodiment, the handle **110** is configured to enable handling of the apparatus **100**. For example, the handle **110** is thick and broad to enable easy grip and movement of the apparatus **100** while dispensing. In another example, the handle **110** can be thin and sleek in order to reduce the size of the apparatus **100**. In a yet another embodiment, the handle **110** is configured to enable handling of the cover **104** separately for shovelling the external particulate matter such as snow, and filling or refilling the particulate matter into the bucket **102**. As illustrated in FIG. 1, the handle **110** includes a recessed portion **118** configured to support thumb of a user while holding the apparatus **100**. The recessed portion **118** facilitates a strong grip of the handle **110** during dispensing of the particulate matter from the apparatus **100**.

In one embodiment, during dispensing of the particulate matter from the apparatus **100**, the handle **110** is placed above an axis **111** passing through a center of gravity along the longitudinal direction of the apparatus **100**, as illustrated more clearly in FIGS. 2 and 3. However, while in normal conditions, i.e., when the apparatus is not operating or dispensing, the handle **110** is placed substantially parallel to the axis **111**. The placement of the handle **110** above the axis **111** enables easy dispensing of the particulate matter without applying large force for tilting and moving the apparatus **100.** For example, in the normal condition, the center of gravity of the apparatus **100** is close to a center of the bucket **102**, while during dispensing, the center of gravity moves down along with the weight of the bucket **102.** Therefore, the force required to tilt the apparatus **100** is reduced, as the handle **110** automatically tilts the apparatus **100** due to the weight of the particulate matter filled in the apparatus **100.**

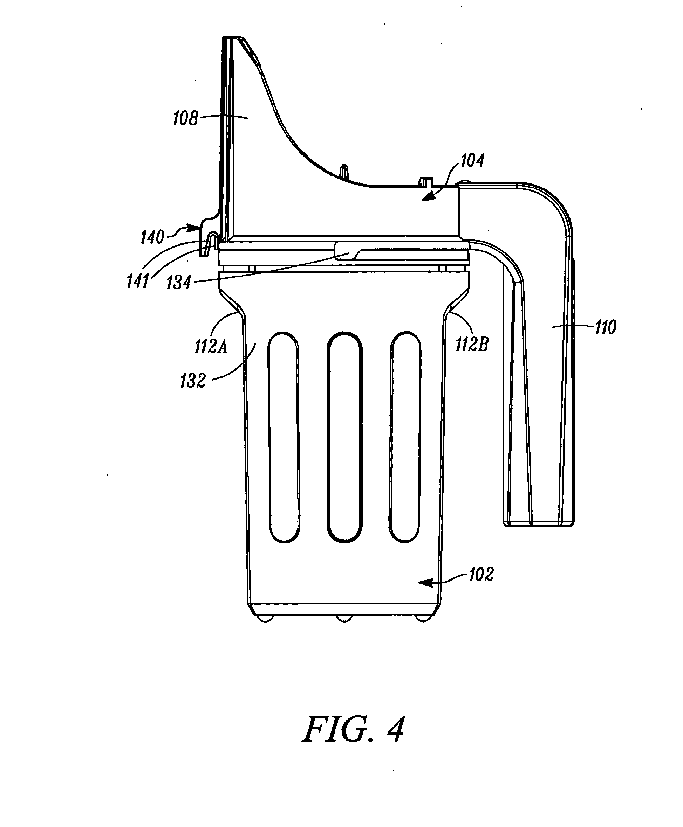

In a further embodiment, the cover **104** is connected to the bucket **102** using a bayonet locking mechanism. For example, a vertically protruding portion **120** of the cover **104** inserts and rotates into a groove **122** within the bucket **102** to enable locking of the two. In one embodiment, the cover **104** may further include an indicator **134** configured to indicate that the cover **104** is in a locked position with the bucket **102.** For example, the cover **104** may include a 'lip' **134** on each side of the cover **104** and above the protruded portion **120,** to indicate that the cover **104** is in the locked position, as illustrated more clearly in FIG. 4. As will be understood by a person skilled in the art, the indicator **134** prevents the cover **104** from extra turning and rotation that may damage the cover **104** and its locking mechanism. In another embodiment, the cover **104** may be connected to the bucket **102** using a snap-fit locking mechanism or with the help of a thread that is sectioned. As will be understood by a person skilled in the art, the locking mechanisms are merely illustrative and may be varied to achieve similar results.

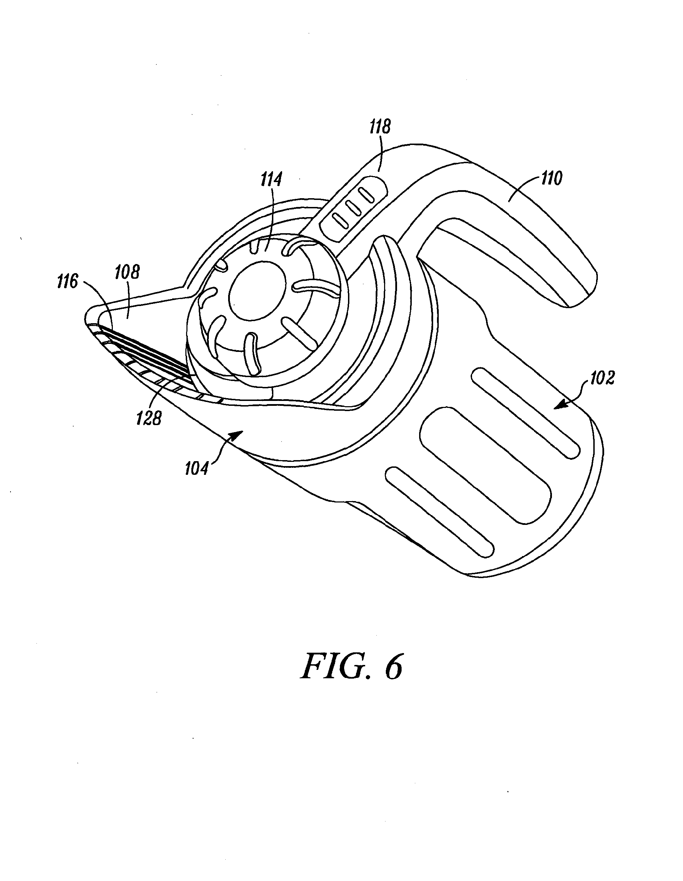

FIG. 6 illustrates the apparatus **100** for dispensing particulate matter, according to another embodiment of the present invention. The apparatus **100** includes the knob **114** that is a large arcuate knob for easy grip while using gloves. Further, the knob **114** selects the set of apertures on the selection plate **106**. As shown in the figure, the third aperture **128** is selected for dispensing the particulate matter.

According to the embodiments presented herein, the bucket **102** and the cover **104** are manufactured separately using materials such as plastic, ceramic or metal etc.

In the drawings and specification, there have been disclosed preferred embodiments and examples of the invention and, although specific terms are employed, they are used in a generic and descriptive sense only and not for the purpose of limitation of the scope of the invention being set forth in the following claims.

## Claims

1. An apparatus (**100**) for dispensing particulate matter, the apparatus (**100**) comprising:
a bucket (**102**) configured to store the particulate matter;
a cover (**104**) detachably connected to the bucket (**102**); **characterized in that**, said cover (**104**) comprises;
a selection plate (**106**) configured to selectively dispense the particulate matter;
a shovel portion (**108**) configured to facilitate at least one of dispensing the particulate matter and filling the particulate matter into the bucket (**102**); and
a handle (**110**) configured to facilitate handling of the apparatus (**100**).

2. The apparatus (**100**) as claimed in claim 1, wherein the shovel portion (**108**) has a scoop shape.

3. The apparatus (**100**) as claimed in claim 1, wherein the handle (**110**) is further configured to facilitate handling of the cover (**104**) for shoveling.

4. The apparatus (**100**) as claimed in claim 1, wherein the handle (**110**) includes a recessed portion (**118**) configured to enable grip of the handle (**110**).

5. The apparatus (**100**) as claimed in claim 1, wherein the bucket (**102**) includes a one or more recessed portions (**112**) provided on an outer surface (**132**) of the bucket (**102**).

6. The apparatus (**100**) as claimed in claim 1, wherein the bucket (**102**) further includes a plurality of ribs (**202**) provided on an inner surface (**130**) of the bucket (**102**) to facilitate separation of solidified particulate matter.

7. The apparatus (**100**) as claimed in claim 1, wherein the selection plate (**106**) includes a set of apertures configured to dispense the particulate matter.

8. The apparatus (**100**) as claimed in claim 7, wherein the selection plate (**106**) further includes a knob (**114**) configured to select at least one of a first set of apertures (**124**), a second set of apertures (**126**) and a third aperture (**128**) on the selection plate (**106**) for dispensing the particulate matter.

9. The apparatus (**100**) as claimed in claim 8, wherein the knob (**114**) is selected from a group comprising a rotatable knob and a slideable knob.

10. The apparatus (**100**) as claimed in claim 1, wherein the shovel portion (**108**) further comprises a plurality of ribs (**116**) configured to facilitate the flow of particulate matter.

11. The apparatus (**100**) as claimed in claim 1, wherein the cover (**104**) is connected to the bucket (**102**) using at least one of a bayonet lock, a snap-fit lock and a thread that is preferably sectioned.

12. The apparatus (100) as claimed in claim 1, wherein the handle (110) is located on the apparatus (100) in a manner that during dispensing the particulate matter, the handle (**110**) is placed above the center of gravity of the apparatus (**100**).

13. The apparatus (**100**) as claimed in claim 1, wherein the apparatus (**100**) incorporates a cutting member (**140**).

14. The apparatus (**100**) as claimed in claim 13, wherein the cutting member (**140**) incorporates at least integrates at least one separately manufactured cutting blade (**141**).

15. The apparatus (**100**) as claimed in claim 1 is configured to dispense at least one of salt, fertilizers, sand and stones.

## Patentansprüche

1. Vorrichtung (100) zur Abgabe von teilchenförmigem Material, wobei die Vorrichtung (100) umfasst:
einen Kübel (102), der zum Speichern des teilchenförmigen Materials konfiguriert ist;
eine Abdeckung (104), die lösbar mit dem Kübel (102) verbunden ist, **dadurch gekennzeichnet, dass** die Abdeckung (104) umfasst:
eine Auswahlplatte (106), die zum selektiven Abgeben des teilchenförmigen Materials konfiguriert ist;
einen Schaufelabschnitt (108) der zum Erleichtern von mindestens einem von Abgeben des teilchenförmigen Materials und Füllen des teilchenförmigen Materials in den Kübel (102) konfiguriert ist; und
einen Griff (110), der zum Erleichtern der Handhabung der Vorrichtung (100) konfiguriert ist.

2. Vorrichtung (100) nach Anspruch 1, wobei der Schaufelabschnitt (108) eine Kellenform besitzt.

3. Vorrichtung (100) nach Anspruch 1, wobei der Griff (110) ferner zum Erleichtern der Handhabung der Abdeckung (104) zum Schaufeln konfiguriert ist.

4. Vorrichtung (100) nach Anspruch 1, wobei der Griff (110) einen ausgesparten Abschnitt (118) aufweist, der zum Ermöglichen des Ergreifens des Griffs (110) konfiguriert ist.

5. Vorrichtung (100) nach Anspruch 1, wobei der Kübel (102) einen oder mehrere ausgesparte Abschnitte (112) aufweist, die an einer äußeren Oberfläche (132) des Kübels (102) bereitgestellt sind.

6. Vorrichtung (100) nach Anspruch 1, wobei der Kübel (102) ferner mehrere Rippen (202) aufweist, die an einer inneren Oberfläche (130) des Kübels (102) bereitgestellt sind, um die Trennung von verfestigtem teilchenförmigen Material zu erleichtern.

7. Vorrichtung (100) nach Anspruch 1, wobei die Auswahlplatte (106) einen Satz von Öffnungen aufweist, der zum Abgeben des teilchenförmigen Materials konfiguriert ist.

8. Vorrichtung (100) nach Anspruch 7, wobei die Auswahlplatte (106) ferner einen Knopf (114) aufweist, der zum Auswählen mindestens eines ersten Satzes von Öffnungen (124), eines zweiten Satzes von Öffnungen (126) und einer dritten Öffnung (128) auf der Auswahlplatte (106) zum Abgeben von teilchenförmigen Material konfiguriert ist.

9. Vorrichtung (100) nach Anspruch 8, wobei der Knopf (114) ausgewählt ist aus einer Gruppe, umfassend einen Drehknopf und einen Schieber.

10. Vorrichtung (100) nach Anspruch 1, wobei der Schaufelsatz (108) ferner mehrere Rippen (116) umfasst, die zum Erleichtern der Strömung des teilchenförmigen Materials konfiguriert sind.

11. Vorrichtung (100) nach Anspruch 1, wobei die Abdeckung (104) unter Verwendung mindestens eines von einem Bajonettverschluss, Schnappschloss und Gewinde, das vorzugsweise in Abschnitte unterteilt ist, mit dem Kübel (102) verbunden ist.

12. Vorrichtung (100) nach Anspruch 1, wobei der Griff (110) an der Vorrichtung (100) in einer Weise angeordnet ist, dass während der Abgabe des teilchenförmigen Materials der Griff (110) über dem Schwerpunkt der Vorrichtung (100) angeordnet ist.

13. Vorrichtung (100) nach Anspruch 1, wobei die Vorrichtung (100) eine Schneidelement (140) besitzt.

14. Vorrichtung (100) nach Anspruch 13, wobei das Schneidelement (140) mindestens ein separat hergestelltes Schneidmesser (141) aufnimmt.

15. Vorrichtung (100) nach Anspruch 1, wobei die Vorrichtung zum Ausgeben von mindestens einem von Salz, Düngemittel, Sand und Steinen konfiguriert ist.

## Revendications

1. Appareil (100) servant à distribuer une matière particulaire, l'appareil (100) comportant :
un seau (102) configuré pour stocker la matière particulaire ;
un couvercle (104) relié de façon détachable au seau (102) ; **caractérisé en ce que** ledit couvercle (104) comporte :
une plaque (106) de sélection configurée pour distribuer sélectivement la matière particulaire ;
une partie (108) de pelle configurée pour faciliter au moins une action parmi celles consistant à distribuer la matière particulaire et à remplir le seau (102) avec la matière particulaire ; et
une poignée (110) configurée pour faciliter la manipulation de l'appareil (100).

2. Appareil (100) selon la revendication 1, la partie (108) de pelle présentant une forme en écope.

3. Appareil (100) selon la revendication 1, la poignée (110) étant en outre configurée pour faciliter la manipulation du couvercle (104) pour pelleter.

4. Appareil (100) selon la revendication 1, la poignée (110) comprenant une partie (118) en creux configurée pour permettre la préhension de la poignée (110).

5. Appareil (100) selon la revendication 1, le seau (102) comprenant une ou plusieurs parties (112) en creux aménagées sur une surface extérieure (132) du seau (102).

6. Appareil (100) selon la revendication 1, le seau (102) comprenant en outre une pluralité de nervures (202) aménagées sur une surface intérieure (130) du seau (102) pour faciliter la séparation de matière particulaire solidifiée.

7. Appareil (100) selon la revendication 1, la plaque (106) de sélection comprenant un ensemble d'ouvertures configurées pour distribuer la matière particulaire.

8. Appareil (100) selon la revendication 7, la plaque (106) de sélection comprenant en outre un bouton (114) configuré pour sélectionner au moins un élément parmi un premier ensemble d'ouvertures (124), un deuxième ensemble d'ouvertures (126) et une troisième ouverture (128) sur la plaque (106) de sélection pour distribuer la matière particulaire.

9. Appareil (100) selon la revendication 8, le bouton (114) étant choisi dans un groupe comportant un bouton tournant et un bouton coulissant.

10. Appareil (100) selon la revendication 1, la partie (108) de pelle comportant en outre une pluralité de nervures (116) configurées pour faciliter l'écoulement de matière particulaire.

11. Appareil (100) selon la revendication 1, le couvercle (104) étant lié au seau (102) en utilisant au moins un moyen parmi un verrouillage à baïonnette, un verrouillage à encliquetage et un filetage qui est de préférence interrompu.

12. Appareil (100) selon la revendication 1, la poignée (110) étant située sur l'appareil (100) de telle manière que, pendant la distribution de la matière particulaire, la poignée (110) soit placée au-dessus du centre de gravité de l'appareil (100).

13. Appareil (100) selon la revendication 1, l'appareil (100) incorporant un organe (140) de coupe.

14. Appareil (100) selon la revendication 13, l'organe (140) de coupe incorporant au moins une lame (141) de coupe fabriquée séparément.

15. Appareil (100) selon la revendication 1, configuré pour distribuer au moins une matière parmi du sel, des engrais, du sable et des cailloux.
